# EUROPÄISCHE PATENTANMELDUNG

(11) **EP 3 758 254 A1**
(43) Veröffentlichungstag der Anmeldung: **30.12.2020**
(21) Anmeldenummer: 19182804.5
(22) Anmeldetag: 27.06.2019
(51) Int. Cl.: H04B 7/185, H04B 7/212

(54) **KOLLISIONSFREIES VERSENDEN VON SENSORDATEN MEHRERER SENSOREN AN EINEN SATELLITEN**

(71) Anmelder: Siemens Aktiengesellschaft, 80333 München (DE)
(72) Erfinder: Huth, Hans-Peter, 80638 München (DE); Zeiger, Florian, 85635 Höhenkirchen-Siegertsbrunn (DE)

(57) **Zusammenfassung**

Die Erfindung betrifft ein Verfahren zum Versenden von Sensordaten von mehreren Sensoren (30) an einen Satelliten (10). In einer ersten Phase, die als Registrierungsphase bezeichnet wird, registriert der Satellit (10) die infrage kommenden Sensoren (30) und teilt ihnen jeweils ein Zeitfenster zum Senden ihrer jeweiligen Sensordaten zu. In einer zweiten Phase, die als Sendephase bezeichnet wird, fragt der Satellit (10) gezielt, nämlich beispielsweise gemäß einer von ihm in der Registrierungsphase erstellten Liste, die Sensordaten bei den einzelnen Sensoren (30) ab. Damit ist ein optimierter und selbstlernender Zugriff von Satelliten (10) auf bodengestützte Sensorik möglich.

Des Weiteren betrifft die Erfindung einen für die Durchführung des genannten Verfahrens geeigneten Satelliten (10).

## Beschreibung

Die Erfindung betrifft ein Verfahren zum Versenden von Sensordaten mehrerer Sensoren an einen Satelliten. Des Weiteren betrifft die Erfindung einen für die Durchführung des genannten Verfahrens geeigneten Satelliten.

Die Erfindung adressiert das Problem, dass insbesondere in satellitengestützten IoT-Szenarien ein Satellit in der Lage sein muss, die Sensordaten einer Vielzahl über ein Gebiet verteilter, terrestrischer Sensoren während seines Überflugs über das Gebiet zu empfangen. Versuchen mehrere Sensoren gleichzeitig zu senden, führt dies zu sogenannten Kollisionen, d.h. die gesendeten Daten überlagern sich im Funkkanal und können vom Satelliten nicht mehr gelesen werden.

Es sind Algorithmen bekannt, die Kollisionen auf Funkstrecken erkennen. Sobald eine Kollision erkannt wurde, veranlassen die Algorithmen, dass die Kommunikationspartner koordiniert ihre Datenpakete senden. Nachteilig sind jedoch die Verluste bei der ersten Kollision und Verzögerungen durch die Koordination und Wiederholung des Sendevorgangs.

Gesucht ist also ein Konzept, welches das Senden von Sensordaten mehrerer Sensoren an einen Satelliten möglichst effizient gestaltet. Insbesondere sollen Kollisionen durch gleichzeitig sendende Sensoren vermieden oder die dadurch entstehenden nachteiligen Folgen zumindest abgemildert werden.

Das in den unabhängigen Ansprüchen formulierte Verfahren und der zur Durchführung dieses Verfahrens geeignete Satellit bieten eine Lösung für die gestellte Aufgabe an. Variationen und spezielle Ausführungsformen sind in den abhängigen Ansprüchen, der Beschreibung und den Zeichnungen offenbart.

Das erfindungsgemäße Verfahren zum Versenden von Sensordaten mehrerer Sensoren an einen Satelliten umfasst dabei die folgenden Schritte:
- Bekanntgabe von zur Verfügung stehenden Registrierungszeitschlitzen durch den Satelliten an alle in Funkreichweite befindlichen, zur Versendung von Sensordaten in Frage kommenden Sensoren,
- Auswählen jeweils eines der bekanntgegebenen Registrierungszeitschlitze durch jeden der genannten Sensoren,
- Senden einer Registrierungsnachricht durch den jeweiligen Sensor an den Satelliten im gewählten Registrierungszeitschlitz, wobei die Registrierungsnachricht ein systemweit eindeutiges Identifizierungszeichen des Sensors enthält,
- Speichern des Identifizierungszeichens des Sensors und der aktuellen Position des Satelliten, an dem sich der Satellit bei Eingang der Registrierungsnachricht befindet, durch den Satelliten,
- Bestätigung einer erfolgten Registrierung an den entsprechenden Sensor durch den Satelliten,
- Senden jeweils einer Abfragenachricht zur Abfrage von Sensordaten durch den Satelliten an jeweils einen registrierten Sensor, wobei die Abfragenachricht einen Empfangszeitraum enthält, in dem der Satellit zum Empfang der Sensordaten des entsprechenden Sensors bereit ist, wobei die Festlegung des vom Satelliten gewählten Empfangszeitraums auf dem von dem jeweiligen Sensor gewählten Registrierungszeitschlitz basiert, wobei alternativ der Satellit eine gemeinsame Abfragenachricht an mehrere Sensoren sendet, in denen er für jeden der mehreren Sensoren einen separaten Empfangszeitraum zum Empfang der Sensordaten festlegt, und
- Senden der Sensordaten an den Satelliten durch den jeweiligen Sensor in dem ihm in der Abfragenachricht vorgegebenen Empfangszeitraum.

Im Gegensatz zum Stand der Technik, bei dem erst nach einer erfolgten und erkannten Kollision der Datenströme, die von zwei Sensoren simultan an denselben Satelliten gesendet wurden, Maßnahmen ergriffen werden, versucht das erfindungsgemäße Verfahren, solche Kollisionen schon im Vorhinein zu vermeiden. Dies wird dadurch erreicht, dass der Satellit das Senden der Sensordaten aktiv koordiniert. Konkret registriert der Satellit in einer ersten Phase, die im Folgenden auch als Registrierungsphase bezeichnet wird, die infrage kommenden Sensoren und teilt ihnen jeweils ein Zeitfenster zum Senden ihrer jeweiligen Sensordaten zu. In einer zweiten Phase, die auch als Sendephase bezeichnet wird, fragt der Satellit gezielt, nämlich gemäß einer von ihm in der Registrierungsphase erstellten Liste, die Sensordaten bei den einzelnen Sensoren ab.

Die Registrierungsphase umfasst im Allgemeinen die folgenden Schritte:
- Bekanntgabe der Registrierungszeitschlitze,
- Auswählen eines Registrierungszeitschlitzes,
- Senden einer Registrierungsnachricht,
- Speichern des Identifizierungszeichens und der aktuellen Position und
- Bestätigung einer erfolgten Registrierung.

Die Sendephase umfasst im Allgemeinen die Schritte des
- Sendens der Abfragenachricht und
- Sendens der Sensordaten.

Varianten dieses grundlegenden Konzepts sind möglich. So kann ein Sensor beispielsweise in Ausnahmefällen bereits während der Registrierungsphase seine Sensordaten an den Satelliten schicken, nämlich z.B. dann, wenn die zu versendende Datenmenge klein ist, wie weiter unten im Detail erläutert werden wird.

Das Verfahren zum Versenden von Sensordaten mehrerer Sensoren kann demnach allgemein auch als Verfahren zur Koordinierung des Versendens der Sensordaten verstanden werden.

Es wird im Folgenden der Einfachheit halber das koordinierte Versenden von Sensordaten mehrerer Sensoren an einen Satelliten beschrieben. Die Erfindung lässt sich prinzipiell aber auch auf mehrere Satelliten übertragen. Besteht das System aus mehreren Satelliten, werden die Registrierungs- und Sendephase für alle beteiligten Satelliten durchgeführt.

Unter einem Sensor wird im Rahmen dieser Patentanmeldung ein elektronisches Gerät mit einer Vorrichtung zur Kommunikation mit einem Satelliten verstanden. Die Vorrichtung ist so konfiguriert, dass sie zum Empfang von Signalen/Nachrichten und Senden von Signalen/Nachrichten von bzw. an den Satelliten fähig ist. Hierunter fallen beispielsweise auch die Kenntnis der entsprechenden Funkfrequenzen, etwaige Zugangsschlüssel oder die Kenntnis der "unique ID" (UID), mit der jeder geostationäre oder die Erde umlaufende Satellit eindeutig identifiziert werden kann.

Der Sensor stellt Daten bereit, die dafür bestimmt sind, an einen Satellit geschickt zu werden. In aller Regel ist vorgesehen, dass der Satellit seinerseits die empfangenen Daten sofort oder zu einem späteren Zeitpunkt zu einer Bodenstation weiterleitet. Die Bodenstation kann beispielsweise ein (zentraler) Server, eine Anlage mit einer Verarbeitungseinheit oder auch ein weiterer Sensor sein.

Der Sensor besitzt ausreichend Speicherkapazität, um die oben genannten Daten so lange zu speichern, bis eine Möglichkeit zum Versenden der Sensordaten an einen Satelliten besteht. Insbesondere muss der Sensor die Sensordaten so lange speichern, bis er von einem Satelliten eine entsprechende Abfragenachricht erhält.

Der Sensor weist ein Identifizierungszeichen auf, das systemweit eindeutig ist. Systemweit eindeutig heißt, dass es den jeweiligen Sensor von allen anderen, potenziell mit dem Satelliten kommunizierenden Sensoren eindeutig identifiziert. Vorteilhafterweise weisen alle für einen bestimmten Satelliten infrage kommenden Sensoren einen Sendekanal mit denselben wesentlichen Eigenschaften auf. Dies hat den Vorteil, dass Multiplex-Verfahren wie z.B. Frequenzmultiplex, Zeitschlitze oder Codes nicht vorausgesetzt werden müssen.

Vorteilhafterweise weist der Sensor eine interne Uhr auf, die mit der Zeit des Satelliten synchronisiert ist.

Des Weiteren ist es vorteilhaft, wenn der Sensor fähig ist, zu bestimmen, wann er sich voraussichtlich in Funkreichweite zu dem Satelliten befindet. Dies hat den Vorteil, dass der Sensor nicht permanent in Bereitschaft gehalten wird, die Abfragenachricht des Satelliten zu empfangen, sondern dass der Sensor im Voraus berechnet, wann sich ihm der betreffende Satellit nähert und sich erst (und nur) dann gezielt einschaltet. Somit vermeidet der Sensor, einen Großteil der Zeit auf Standby zu stehen, nur um den Moment abzupassen, wenn sich ein Satellit in Funkreichweite dem Sensor nähert. Stattdessen schaltet sich der Sensor gezielt dann ein, wenn er den Überflug eines Satelliten in ausreichender Entfernung erwartet. Dieser Aspekt ist detailliert in der am 6. Juni 2019 eingereichten europäischen Patentanmeldung mit dem Anmeldeaktenzeichen 19178817.3 beschrieben.

Der Satellit überfliegt periodisch das Gebiet, in dem sich der, der Einfachheit halber als ortsfest angenommene, Sensor befindet. Je nach Überflughöhe und Umlaufbahn des Satelliten findet ein Überflug mehr oder weniger häufig statt (von mehrmals am Tag bis alle paar Tage einmal). Es ist auch möglich, dass mehrere Satelliten dasselbe Gebiet periodisch überfliegen. In diesem Fall kann die Abfrage der Sensordaten so koordiniert sein, dass die betreffenden Sensoren entweder von dem einem oder von dem anderen Satelliten zum Versenden ihrer Sensordaten aufgefordert werden.

Die Zeitdauer, während derer sich ein Sensor in Funkreichweite zu einem bestimmten Satelliten befindet, hängt unter anderem davon ab, wo im Abdeckungsbereich *(englisch: footprint)* des Satelliten sich der Sensor befindet. Diese Zeitdauer, die auch als Kontaktzeitfenster bezeichnet wird, kann dann, wenn sich der Sensor zu einem Zeitpunkt im Mittelpunkt des Abdeckungsbereichs befindet, beispielsweise 5 - 45 Minuten betragen.

So wie der Sensor mit einer Vorrichtung zur Kommunikation mit dem Satelliten eingerichtet ist, weist analog auch der Satellit eine Vorrichtung zur Kommunikation mit dem Sensor auf. Die Sendeeinrichtung der Kommunikationsvorrichtung ist vorteilhafterweise als sogenannter "Broadcast" ausgestaltet. Dies bedeutet, dass eine gesendete Nachricht von allen Sensoren im Empfangsbereich gelesen werden kann.

Des Weiteren ist die Kommunikationsvorrichtung des Satelliten analog zur Kommunikationsvorrichtung des Sensors so konfiguriert, dass sie zum Empfang von Signalen/Nachrichten und Senden von Signalen/Nachrichten von bzw. an die Sensoren fähig ist. Hierunter fallen ebenfalls beispielsweise die Kenntnis der entsprechenden Funkfrequenzen oder etwaige Zugangsschlüssel.

Im Folgenden wird näher auf die einzelnen Schritte des Verfahrens eingegangen. Sie können, müssen aber nicht zwangsläufig, in der in Anspruch 1 dargestellten Reihenfolge durchgeführt werden.

In der Registrierungsphase registriert der Satellit die infrage kommenden Sensoren und teilt ihnen jeweils ein Zeitfenster zum Senden ihrer jeweiligen Sensordaten zu. Diese Phase kann auch als Lernphase verstanden werden, in der der Satellit lernt, welche Sensoren wo auf seiner Bahn verfügbar sind.

Zunächst gibt der Satellit an alle in Funkreichweite befindlichen, zur Versendung von Sensordaten in Frage kommenden Sensoren die zur Verfügung stehenden Registrierungszeitschlitze bekannt.

Dies kann zum Beispiel mittels eines Erkennungssignals, das im Fachjargon auch als "Beacon" bezeichnet wird, geschehen. Wird das Erkennungssignal in Form eines "Broadcasts" ausgesendet, kann es selbstverständlich auch von anderen, nicht für den Empfang von Sensordaten mit diesem Satelliten ausgelegten Sensoren, empfangen werden. Die Formulierung, dass der Satellit die zur Verfügung stehenden Registrierungszeitschlitze an alle in Funkreichweite befindlichen, zur Versendung von Sensordaten in Frage kommenden Sensoren verschickt ist also so zu verstehen, dass die Registrierungszeitschlitze *zumindest* allen in Funkreichweite befindlichen, zur Versendung von Sensordaten in Frage kommenden Sensoren bekanntgegeben werden.

In einer Ausführungsform der Erfindung wird zunächst eine Registrierungszeit festgelegt. Dies ist diejenige Zeitspanne (Dauer) während einer Überflugzeit über ein bestimmtes Gebiet, die für die Registrierung aufgewendet wird. Beträgt die Überflugzeit *(englisch: flyby time)* beispielsweise 30 Minuten, kann die Registrierungszeit auf 5 Minute festlegt werden. In diesem Fall könnten nach einer fünfminütigen Registrierungsphase die restlichen 25 Minuten zum Abfragen der Sensordaten verwendet werden. Alternativ kann auch die gesamte Überflugzeit zur Registrierungszeit bestimmt werden und die Abfrage der Sensordaten erst in einem weiteren Überflug des Satelliten über das Gebiet erfolgen.

Des Weiteren werden die zur Verfügung stehenden Registrierungszeitschlitze festgelegt. In obigem Beispiel der fünfminütigen Registrierungszeit könnte beispielsweise festgelegt werden, dass es 300 Registrierungszeitschlitze gibt, wobei zu jeder vollen Sekunde während der Registrierungszeit ein Registrierungszeitschlitz beginnt und zu einer Zehntelsekunde vor jeder vollen Sekunde der Registrierungszeitschlitz endet (jeder Registrierungszeitschlitz dauert in diesem Beispiel also neun Zehntel Sekunden). Diese Information über die zur Verfügung stehenden (hier: dreihundert) Registrierungszeitschlitze werden den Sensoren bekanntgemacht, beispielsweise mittels eines periodisch ausgesendeten Beacons.

Jeder der Sensoren wählt daraufhin einen der bekanntgegebenen, also prinzipiell verfügbaren Registrierungszeitschlitze aus. Die Auswahl kann zufällig erfolgen, beispielsweise durch Erzeugung einer Zufallszahl, die einem bestimmten Registrierungszeitschlitz zugeordnet ist. In dem gewählten Registrierungszeitschlitz sendet der Sensor eine Registrierungsnachricht an den Satelliten. Die Registrierungsnachricht enthält als Mindestinformation ein Identifizierungszeichen des Sensors *(englisch: unique identifier, UID),* mit dem der Sensor systemweit vom Satelliten identifiziert werden kann.

Hat kein anderer Sensor denselben Registrierungszeitschlitz gewählt, also kein anderer Sensor während desselben Zeitraums ebenfalls eine Registrierungsnachricht an den Satelliten verschickt, war die Registrierung des Sensors erfolgreich. Der Satellit speichert bei Eingang der Registrierungsnachricht das Identifizierungszeichen des Sensors, ebenso wie seine eigene momentane Position. Letzteres ist deswegen von Bedeutung, da der Satellit in der Registrierungsphase nicht nur eine Abfolge festlegt, in der er in der Sendephase die Sensordaten abfragt, sondern vorteilhafterweise auch lernt, wann sich welche Sensoren wo auf seiner Bahn befinden.

Als letzten Schritt in der Registrierungsphase bestätigt der Satellit dem entsprechenden Sensor, dass seine Registrierung erfolgreich war. Dies ist deswegen wichtig, da andernfalls der Sensor nicht wüsste, ob seine abgeschickte Registrierungsnachricht den Satelliten wohlbehalten erreichte oder ob es möglicherweise eine Kollision mit einer anderen Registrierungsnachricht eines anderen Sensors gegeben hatte. Erzeugen nämlich mehrere Sensoren im Empfangsgebiet dieselbe Zufallszahl, liegt eine Kollision vor. In diesem Fall müsste der Vorgang in der nächsten Registrierungsphase wiederholt werden.

Um die Wahrscheinlichkeit von zufällig gleich ausgewählten Registrierungszeitschlitzen zu reduzieren, werden in einer bevorzugten Ausführungsform mehr Registrierungszeitschlitze als Sensoren zur Verfügung gestellt. Die 300 Registrierungszeitschlitze sind in diesem Sinn zum Beispiel gut für 100 Sensoren im Abdeckungsbereich des Satelliten geeignet.

Die Anzahl der vom Satelliten zur Verfügung gestellten Registrierungszeitschlitze kann ferner dynamisch in Abhängigkeit von der Anzahl der zur Versendung von Sensordaten in Frage kommenden Sensoren gewählt werden: Ändert sich in einem bestimmten Gebiet die Anzahl der Sensoren, würde dann auch die Anzahl an Registrierungszeitschlitzen angepasst, also geändert, werden.

In einer anderen Ausführungsform werden bewusst auch Zufallszahlen zugelassen, die keinem verfügbaren Registrierungszeitschlitz zugeordnet sind. Generiert ein Sensor eine solche Zufallszahl, ist keine erfolgreiche Registrierung möglich und er müsste sich in der nächsten Registrierungsphase erneut um einen Registrierungszeitschlitz bemühen. Der Vorteil ist jedoch, dass die Kollisionswahrscheinlichkeit für Registrierungsnachrichten reduziert ist. Diese Ausführungsform ist also vor allem dann attraktiv, wenn mehr Sensoren als Registrierungszeitschlitze zur Verfügung stehen.

In einer weiteren Ausführungsform der Erfindung kennt der Sensor seine eigene Position. Handelt es sich um einen stationären Sensor, kann ihm seine Position bei einer Initialisierung zum Beispiel ganz einfach vorgegeben werden. Alternativ kann der Sensor seine Position mittels eines globalen Positionsbestimmungssystems (GPS) bestimmen. Falls die von dem Satelliten ausgesendeten Beacons Bahnparameter enthalten (z.B. im TLE-Format), kann der Sensor auch seine eigene Position darauf basierend abschätzen (wie in der bereits erwähnten europäischen Patentanmeldung mit dem Anmeldeaktenzeichen 19178817.3 beschrieben).

In jedem Fall besteht die Möglichkeit, dass der Sensor bei Kenntnis seiner eigenen (ungefähren) Position berechnet, ob er derzeit am Anfang, in der Mitte, oder am Ende seines Überflugzeitfensters (Kontaktzeitfensters) bezüglich des entsprechenden Satelliten steht. Ein Sensor könnte dadurch die Wahl des Registrierungszeitschlitzes beeinflussen und so ggf. den Bereich seines Sendewunsches in die Mitte oder das Ende des Überflugzeitfensters legen, um so Sensoren, die früher aus den Kontaktfenster herausfallen, Zeit zum Senden ihrer Daten zu geben. Sollte der Sensor dabei Kollisionen feststellen, kann dann in weiteren Überflügen die Sensor-eigene Strategie angepasst werden.

In einer vorteilhaften Ausführungsform der Erfindung führt ein Sensor die Schritte zur Registrierung bei einem Satelliten nur einmalig (für diesen Satelliten) durch.

Wie bereits erwähnt, kann, abhängig von unter anderem der Überflugzeit und der Anzahl der sendewilligen Sensoren, die komplette Überflugzeit in einem ersten Überflug für die Registrierung verwendet werden bzw., im Extremfall, sogar mehrere Überflüge nur für die Registrierung aller infrage kommender Sensoren verwendet werden, bevor der Satellit Sensordaten von den registrierten Sensoren abfragt. Andererseits kann auch eine Zeitspanne als Registrierungszeit verwendet werden, die im Vergleich zur Überflugzeit klein ist. In diesem Fall können gleich beim ersten Überflug ein Großteil oder sogar alle vorhandenen Sensordaten abgefragt werden.

Ist die Datenmenge, die als Sensordaten von einem Sensor zu versenden ist, so klein, dass sie bereits im Registrierungszeitschlitz vollständig übertragen werden kann, kann der Sensor zusammen mit seiner Registrierungsnachricht auch bereits alle zu diesem Zeitpunkt vorhandenen Sensordaten an den Satelliten schicken.

Standardmäßig erfolgt das Senden der Sensordaten jedoch auf Anfrage bzw. Aufforderung des Satelliten. Hierfür sendet der Satellit dezidiert jeweils eine Abfragenachricht an jeweils einen registrierten Sensor. Die Abfragenachricht enthält dabei die Bekanntgabe eines Empfangszeitraums, in dem der Satellit zum Empfang der Sensordaten des entsprechenden Sensors bereit ist. Der Festlegung des Empfangszeitraums basiert dabei auf dem von dem jeweiligen Sensor gewählten Registrierungszeitschlitz.

Im einfachsten Fall kann der Empfangszeitraum, den der Satellit dem Sensor mittels der gesendeten Abfragenachricht bekanntgibt, sinngemäß lauten: "Der Empfang deiner Sensordaten ist ab sofort und bis in spätestens 20 Sekunden von jetzt ab möglich." Der Beginn des Empfangszeitraums kann aber auch erst in der Zukunft liegen; die Abfragenachricht würde dann sinngemäß lauten: "Der Empfang deiner Sensordaten ist ab in einer Minute und dann während maximal 20 Sekunden möglich." Etwaig signifikante Signal- beziehungsweise Datenübertragungszeiten sollten vorteilhafterweise bei der Festlegung des Empfangszeitraums berücksichtigt werden.

Alternativ ist es auch möglich, dass der Satellit nicht jedem Sensor einzeln eine separate Abfragenachricht mit dem für ihn relevanten Empfangszeitraum sendet, sondern dass er eine gemeinsame Abfragenachricht an mehrere Sensoren sendet, in denen er für jeden der mehreren Sensoren einen separaten Empfangszeitraum zum Empfang der Sensordaten festlegt.

Allgemein erscheint es sinnvoll, dass der Satellit den einzelnen Sensoren Empfangszeiträume anbietet, während derer sich die Sensoren in Funkreichweite zum Satellit befinden.

Auch wenn dies nicht zwingend erforderlich ist, erscheint es ferner sinnvoll, dass die Reihenfolge, mit der der Satellit den einzelnen Sensoren Abfragenachrichten sendet und Empfangszeiträume anbietet, den von den Sensoren ausgewählten Registrierungszeitschlitzen aus der Registrierungsphase entspricht. Dieses prinzipielle Vorgehen zugrunde legend, würde der Satellit der Reihe nach die Liste der am aktuellen Standort registrierten Sensoren abfragen (die Liste listet die einzelnen Sensoren gemäß ihrer gewählten Registrierungszeitschlitze auf) und der Reihe nach die entsprechenden Sensordaten empfangen.

Sollte eine sehr große Zahl an Sensoren viele Daten an die Satelliten senden wollen, können die Satelliten die Datensammelphase, das heißt die Sendephase, auch auf mehrere Überflüge ausdehnen.

Hat der angefragte Sensor Daten an den Satelliten zu versenden, sendet er diese während des angebotenen Empfangszeitraums. Hat er keine zu versenden, kann er dies in einer speziellen Ausführungsform der Erfindung dem Satellit ebenfalls mitteilen. In dieser Variante würde der Satellit bei einer ausbleibenden Antwort darauf schließen, dass der entsprechende Sensor - aus welchen Gründen auch immer: Ausfall, Fortbewegung, etc. - nicht mehr verfügbar ist. Der Satellit kann dann das vergebene Empfangszeitfenster, das heißt den vergebenen Empfangszeitraum, freigeben und beim nächsten Überflug an einen anderen Sensor vergeben.

In einer weiteren Ausführungsform der Erfindung bestätigt der Satellit eine erfolgreiche Übertragung von Sensordaten dem entsprechenden Sensor in der nächsten an diesen Sensor gerichteten Abfragenachricht. Dies hat den Vorteil, dass der Sensor bei einem Ausbleiben der Bestätigung weiß, dass die zuvor versendeten Sensordaten nicht beim Satelliten angekommen sind. Er würde dann versuchen, bei der nächsten Abfrage die Sensordaten erneut zu verschicken. Wenn gar keine nächste Abfrage ihn mehr von Seiten des Satelliten erreicht, könnte sich der entsprechende Sensor in der nächsten Registrierungsphase erneut beim Satelliten registrieren und anschließend die fehlgeschlagenen Sensordaten an den Satelliten senden.

Vorteilhafterweise schließt sich in regelmäßigen oder unregelmäßigen Intervallen an eine Sendephase eine erneute Registrierungsphase an. Ob dabei bereits registrierte Sensoren sich nochmals registrieren müssen, ist offen. Jedenfalls sollte mit einer erneuten Registrierungsphase neu hinzugekommenen Sensoren die Möglichkeit gegeben werden, sich ebenfalls bei dem oder den entsprechenden Satelliten zu registrieren, um zukünftig ebenfalls Empfangszeiträume zugewiesen zu bekommen. In diesem Fall kann von einem selbstlernenden System gesprochen werden.

Der Sensor kann ferner entweder ortsfest oder mobil sein.

Sind die Sensoren stationär, kann der Zeitschlitz für die Registrierung vergleichsweise kurzgehalten werden, so dass gegebenenfalls erst nach mehreren Überflügen alle Sensoren vom System, das heißt von dem oder den Satelliten, registriert (in anderen Worten: erlernt) wurden.

Mobile Sensoren dagegen können sich aus den in der Registrierungsphase erlernten Regionen heraus bewegen. Dies kann zu erhöhtem Bedarf für Registrierungen führen und die Zeiten für die Registrierung müssen entsprechend angepasst werden. Auch werden in diesem Falle oft vergebliche Abfragen gestellt. Insgesamt wird die Effizienz des Verfahrens bei sehr hoher Mobilität der Sensoren leiden, da sich sehr schnell bewegende Sensoren in der Regel auch schnell aus dem Abdeckungsbereich (footprint) des Satelliten herausbewegen.

In einer weiteren Ausführungsform der Erfindung sind der Satellit und die Sensoren zum Empfang beziehungsweise Versenden von jeweils zwei unterschiedlichen Funktechnologien oder Funkfrequenzen eingerichtet. Die Registrierung der Sensoren beim Satelliten geschieht dann mittels der einen Funktechnologie bzw. Funkfrequenz und die Abfrage und das Versenden der Sensordaten auf der anderen Funktechnologie bzw. Funkfrequenz. Dies hat den Vorteil, dass beide Phasen unabhängig voneinander und zumindest teilweise auch simultan durchgeführt werden können.

Zusammengefasst stellt das erfindungsgemäße Verfahren ein einfaches Verfahren dar, dass auch gut auf ressourcenbeschränkten Sensoren implementiert werden kann. Des Weiteren ist das Verfahren unabhängig von der verwendeten Funk-Hardware, das heißt insbesondere unabhängig von der verwendeten Layer 1- und Layer 2-Technologie der Satellitenkommunikation. Da das Verfahren ein selbstlernendes Verfahren ist, ist es schließlich auch flexibel bezüglich einer sich ändernden Anzahl von Sensoren und einer sich ändernden Satellitenkonstellation.

Die Erfindung betrifft auch einen Satelliten, der geeignet ist, das erfindungsgemäße Verfahren auszuführen. Das bedeutet, dass der Satellit dafür eingerichtet ist, Sensordaten von mehreren Sensoren zu empfangen, wobei sich die Sensoren bei dem Satelliten registrieren und die registrierten Sensoren ihre jeweiligen Sensordaten auf Anforderung des Satelliten an den Satelliten senden. Konkret ist der Satellit dergestalt eingerichtet
- zur Verfügung stehende Registrierungszeitschlitze allen in Funkreichweite befindlichen, zur Versendung von Sensordaten in Frage kommenden Sensoren bekanntzugeben,
- ein systemweit eindeutiges Identifizierungszeichen eines Sensors und die aktuelle Position des Satelliten, an der sich der Satellit bei Eingang einer das Identifizierungszeichen enthaltenden Registrierungsnachricht des Sensors befindet, zu speichern,
- eine erfolgte Registrierung eines Sensors dem entsprechenden Sensor zu bestätigen,
- jeweils eine Abfragenachricht zur Abfrage von Sensordaten an jeweils einen registrierten Sensor zu senden, wobei die Abfragenachricht einen Empfangszeitraum enthält, in dem der Satellit zum Empfang der Sensordaten des entsprechenden Sensors bereit ist, wobei die Festlegung des vom Satelliten gewählten Empfangszeitraums auf dem von dem jeweiligen Sensor gewählten Registrierungszeitschlitz basiert, wobei alternativ der Satellit eine gemeinsame Abfragenachricht an mehrere Sensoren senden kann, in denen er für jeden der mehreren Sensoren einen separaten Empfangszeitraum zum Empfang der Sensordaten festlegt, und - Sensordaten, die an den Satelliten durch den jeweiligen Sensor in dem ihm in der Abfragenachricht vorgegebenen Empfangszeitraum gesendet werden, zu empfangen.

In der Regel verarbeitet und verwertet der Satellit die empfangenen Sensordaten nicht selbst, sondern er leitet sie an eine Bodenstation weiter. Beispiele für eine Bodenstation sind ein (zentraler) Server (eines übergeordneten Systems, einer Cloud, etc.), eine Anlage mit einer Verarbeitungseinheit oder auch ein weiterer Sensor. Je nach der Konnektivität zwischen dem Satelliten und der Bodenstation kann es vorteilhaft sein, wenn der Satellit einen Zwischenspeicher zur Speicherung der empfangenen Sensordaten aufweist. Dies erlaubt ihm ein gewisses Maß an Flexibilität, wann er die Sensordaten an die Bodenstation weiterleitet.

Spezielle Ausführungsformen, die im Rahmen des Verfahrens genannt wurden und auch auf den Satelliten als solchen anwendbar sind, werden zur Vermeidung von Wiederholungen hier nicht nochmals gesondert erwähnt. Ebenso wird für die Erläuterung der einzelnen Merkmale des Satelliten auf die obenstehenden Erklärungen des entsprechenden Verfahrens verwiesen.

Nachfolgend wird die Erfindung anhand der beigefügten Abbildungen veranschaulicht. Die Abbildungen zeigen beispielhaft und schematisch ausgewählte Ausführungsformen ohne Beschränkung des beanspruchten Schutzumfangs.

Die Abbildungen zeigen:
- Fig. 1:: Sensoren, die von einem Satelliten überflogen werden und sich innerhalb oder außerhalb eines Funkfelds des Satelliten befinden; und
- Fig. 2:: Sensoren, die von einem Satelliten überflogen werden und sich innerhalb oder außerhalb eines ersten oder zweiten Funkfelds des Satelliten befinden.

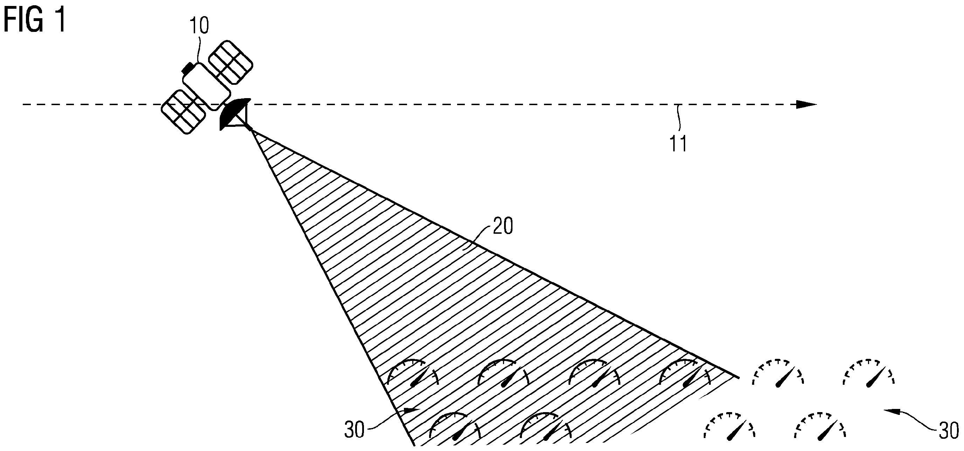

Die Abbildung 1, auch als Fig. 1 abgekürzt, zeigt Sensoren 30, die sich in einem bestimmten Gebiet verteilt befinden. Die Abbildung 1 zeigt ferner einen Satelliten 10, der die Sensoren 30 überfliegt. Die Flugbahn des Satelliten 10 ist mit dem Bezugszeichen 11 gekennzeichnet.

Der Satellit 10 weist eine Kommunikationsvorrichtung auf, mit der er während der Registrierungsphase Erkennungssignale (Beacons) aussenden und Registrierungsnachrichten der Sensoren 30 empfangen kann. Die Reichweite der ausgesendeten Erkennungssignale ist durch das schraffierte Funkfeld 20 dargestellt. Wie in Abbildung 1 zu sehen ist, befinden sich ein Teil der Sensoren 30 in Funkreichweite, also innerhalb des Funkfelds 20, und ein Teil der Sensoren 30 außerhalb der Funkreichweite. Die außerhalb des Funkfelds befindlichen Sensoren 30 sind strichliert gezeichnet. Bewegt sich der Satellit 10 auf seiner Flugbahn 11 weiter, fallen die in Abbildung 1 links befindlichen Sensoren 30 aus dem Funkfeld 20, während die sich rechts, momentan noch außerhalb des Funkfelds 20 befindlichen Sensoren 30 in Funkreichweite des Satelliten 10 gelangen.

Der Satellit 10 ist ferner dafür eingerichtet, während der Sendephase Abfragenachrichten an die Sensoren 30 zu senden und jedem Sensor 30 einen bestimmten Empfangszeitraum zuzuweisen, in dem er dem Satelliten 10 seine Sensordaten schicken kann. Zum Empfang der Abfragenachricht muss sich der jeweilige Sensor 30 auch im Funkfeld 20 des Satelliten 10 befinden.

Je nach Anwendungsfall kann nun das Kontaktfenster, also der Zeitraum, in dem sich bestimmte Sensoren 30 im Funkfeld 20 des Satelliten 10 befinden, für die Registrierung und Datenabfrage genutzt werden. Beispielsweise kann ein Teil der verfügbaren Zeit als Registrierungsphase und der Rest der Zeit zur Abfrage der Sensordaten verwendet werden. Alternativ kann auch die gesamte Überflugzeit (flyby time) zur Registrierung verwendet werden - etwa, wenn die Anzahl an zu registrierenden Sensoren im Vergleich zur Überflugzeit groß ist - und erst in einem der darauffolgenden Überflüge Sensordaten von den registrierten Sensoren 30 abgefragt und übermittelt werden.

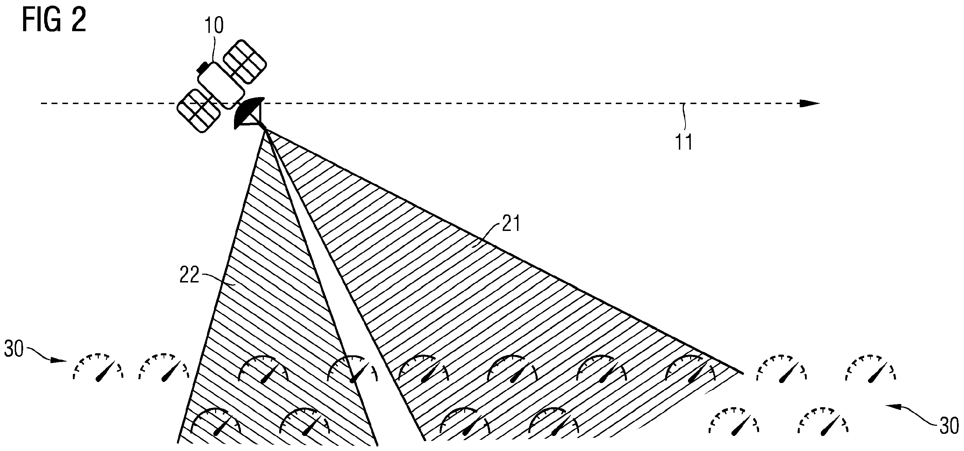

Die Abbildung 2, auch als Fig. 2 abgekürzt, illustriert die Variante zweier unterschiedlicher Funkfrequenzen oder Funktechnologien. Der Satellit 10 gibt in einem ersten Funkfeld 21 den sich in diesem Funkfeld 21 befindlichen Sensoren 30 die verfügbaren Registrierungszeitschlitze bekannt, woraufhin sich die Sensoren 30 beim Satelliten 10 durch Wahl eines Registrierungszeitschlitz registrieren können. Separat vom ersten Funkfeld 21 gibt es ein zweites Funkfeld 22. Die in dem zweiten Funkfeld 22 befindlichen Sensoren 30 erhalten jeweils eine Abfragenachricht des Satelliten 10 und es wird ihnen jeweils ein Zeitraum zugewiesen, in dem sie ihre Sensordaten an den Satelliten 10 senden können.

Die unterschiedlichen Funkfelder können durch unterschiedliche Frequenzen oder auch durch unterschiedliche Funktechnologien realisiert sein.

## Patentansprüche

1. Verfahren zum Versenden von Sensordaten mehrerer Sensoren (30) an einen Satelliten (10) umfassend die folgenden Schritte:
- Bekanntgabe von zur Verfügung stehenden Registrierungszeitschlitzen durch den Satelliten (10) an alle in Funkreichweite befindlichen, zur Versendung von Sensordaten in Frage kommenden Sensoren (30),
- Auswählen jeweils eines der bekanntgegebenen Registrierungszeitschlitze durch jeden der genannten Sensoren (30),
- Senden einer Registrierungsnachricht durch den jeweiligen Sensor (30) an den Satelliten (10) im gewählten Registrierungszeitschlitz, wobei die Registrierungsnachricht ein systemweit eindeutiges Identifizierungszeichen des Sensors (30) enthält,
- Speichern des Identifizierungszeichens des Sensors (30) und der aktuellen Position des Satelliten (10), an dem sich der Satellit (10) bei Eingang der Registrierungsnachricht befindet, durch den Satelliten (10),
- Bestätigung einer erfolgten Registrierung an den entsprechenden Sensor (30) durch den Satelliten (10),
- Senden jeweils einer Abfragenachricht zur Abfrage von Sensordaten durch den Satelliten (10) an jeweils einen registrierten Sensor (30), wobei die Abfragenachricht einen Empfangszeitraum enthält, in dem der Satellit (10) zum Empfang der Sensordaten des entsprechenden Sensors (30) bereit ist, wobei die Festlegung des vom Satelliten (10) gewählten Empfangszeitraums auf dem von dem jeweiligen Sensor (30) gewählten Registrierungszeitschlitz basiert, wobei alternativ der Satellit (10) eine gemeinsame Abfragenachricht an mehrere Sensoren (30) sendet, in denen er für jeden der mehreren Sensoren (30) einen separaten Empfangszeitraum zum Empfang der Sensordaten festlegt, und
- Senden der Sensordaten an den Satelliten (10) durch den jeweiligen Sensor (30) in dem ihm in der Abfragenachricht vorgegebenen Empfangszeitraum.

2. Verfahren nach Anspruch 1,
wobei die Anzahl der Registrierungszeitschlitze größer, insbesondere um mindestens 50% größer, als die Anzahl der in Funkreichweite befindlichen, zur Versendung von Sensordaten in Frage kommenden Sensoren (30) ist.

3. Verfahren nach einem der vorhergehenden Ansprüche,
wobei der Sensor (30) den gewünschten Registrierungszeitschlitz zufällig auswählt, insbesondere durch Erzeugung einer Zufallszahl.

4. Verfahren nach einem der vorhergehenden Ansprüche,
wobei dem Sensor (30) bekannt ist, wo er sich zeitlich im Kontaktzeitfenster mit dem Satelliten (10) befindet, und er unter Berücksichtigung dessen den gewünschten Registrierungszeitschlitz auswählt.

5. Verfahren nach Anspruch 4,
wobei der Sensor (30) einen Registrierungszeitschlitz auswählt, der sich zeitlich am Ende seines Kontaktzeitfensters mit dem Satelliten (10) befindet.

6. Verfahren nach einem der vorhergehenden Ansprüche,
wobei ein Sensor (30) die Schritte zur Registrierung bei einem Satelliten (10) nur einmalig für diesen Satelliten (10) durchführt.

7. Verfahren nach einem der vorhergehenden Ansprüche,
wobei die Registrierung eines Sensors (30) bei einem Satelliten (10) in einem ersten Überflug des Satelliten (10) über den Sensor (30) erfolgt und die Sensordaten in einem der darauffolgenden Überflüge an den Satelliten (10) versendet werden.

8. Verfahren nach einem der Ansprüche 1 bis 6,
wobei der Sensor (30) seine Sensordaten bereits mit der Registrierungsnachricht an den Satelliten (10) schickt, wenn die Menge an Sensordaten so klein ist, dass sie während des Registrierungszeitschlitzes übertragen werden können.

9. Verfahren nach einem der vorhergehenden Ansprüche,
wobei der Satellit (10) den jeweiligen Empfangszeitraum pro Sensor (30), in dem er zum Empfang der Sensordaten des entsprechenden Sensors (30) bereit ist, so festlegt, dass der entsprechende Sensor (30) sich basierend auf den Informationen, die der Satellit (10) sich bei Eingang der Registrierungsnachricht des Sensors (30) gespeichert hat, während des Empfangszeitraum innerhalb der Funkreichweite des Satelliten (10) befindet.

10. Verfahren nach einem der vorhergehenden Ansprüche,
wobei der Sensor (30) dem Satelliten (10) auch dann auf die an ihn gerichtete Abfragenachricht des Satelliten (10) antwortet, wenn er aktuell keine Sensordaten an den Satelliten (10) zu versenden hat.

11. Verfahren nach Anspruch 10,
wobei der Satellit (10) das an einen Sensor (30), dessen Antwort ausbleibt, vergebene Empfangszeitfenster freigibt für zukünftig zu vergebende Empfangszeitfenster an andere Sensoren (30).

12. Verfahren nach einem der vorhergehenden Ansprüche,
wobei der Satellit (10) eine erfolgreiche Übertragung von Sensordaten dem entsprechenden Sensor (30) in der nächsten an diesen Sensor (30) gerichteten Abfragenachricht bestätigt.

13. Verfahren nach einem der vorhergehenden Ansprüche,
wobei der Satellit (10) und die Sensoren (30) zum Empfang beziehungsweise Versenden von jeweils zwei unterschiedlichen Funktechnologien oder Funkfrequenzen eingerichtet sind, und die Registrierung der Sensoren (30) beim Satelliten (10) mittels der einen Funktechnologie bzw. Funkfrequenz geschieht und die Abfrage und das Versenden der Sensordaten auf der anderen Funktechnologie bzw. Funkfrequenz geschieht.

14. Satellit (10), der dafür eingerichtet ist, Sensordaten von mehreren Sensoren (30) zu empfangen, wobei sich die Sensoren (30) bei dem Satelliten (10) registrieren und die registrierten Sensoren (30) ihre jeweiligen Sensordaten auf Anforderung des Satelliten (10) an den Satelliten (10) senden, wobei der Satellit (10) dergestalt eingerichtet ist
- zur Verfügung stehende Registrierungszeitschlitze allen in Funkreichweite befindlichen, zur Versendung von Sensordaten in Frage kommenden Sensoren (30) bekanntzugeben,
- ein systemweit eindeutiges Identifizierungszeichen eines Sensors (30) und die aktuelle Position des Satelliten (10), an der sich der Satellit (10) bei Eingang einer das Identifizierungszeichen enthaltenden Registrierungsnachricht des Sensors (30) befindet, zu speichern,
- eine erfolgte Registrierung eines Sensors (30) dem entsprechenden Sensor (30) zu bestätigen,
- jeweils eine Abfragenachricht zur Abfrage von Sensordaten an jeweils einen registrierten Sensor (30) zu senden, wobei die Abfragenachricht einen Empfangszeitraum enthält, in dem der Satellit (10) zum Empfang der Sensordaten des entsprechenden Sensors (30) bereit ist, wobei die Festlegung des vom Satelliten (10) gewählten Empfangszeitraums auf dem von dem jeweiligen Sensor (30) gewählten Registrierungszeitschlitz basiert, wobei alternativ der Satellit (10) eine gemeinsame Abfragenachricht an mehrere Sensoren (30) senden kann, in denen er für jeden der mehreren Sensoren (30) einen separaten Empfangszeitraum zum Empfang der Sensordaten festlegt, und
- Sensordaten, die an den Satelliten (10) durch den jeweiligen Sensor (30) in dem ihm in der Abfragenachricht vorgegebenen Empfangszeitraum gesendet werden, zu empfangen.

15. Satellit (10) nach Anspruch 14,
wobei der Satellit (10) ferner einen Zwischenspeicher zur Speicherung der empfangenen Sensordaten aufweist.
